(19) Europäisches Patentamt
European Patent Office
Office européen des brevets

(11) **EP 2 938 482 B1**

(12) **FASCICULE DE BREVET EUROPEEN**

(45) Date de publication et mention de la délivrance du brevet:
**17.10.2018 Bulletin 2018/42**

(21) Numéro de dépôt: **13810930.1**

(22) Date de dépôt: **16.12.2013**

(51) Int Cl.:
**B29D 30/06** (2006.01)     **B60C 11/03** (2006.01)

(86) Numéro de dépôt international:
**PCT/EP2013/076640**

(87) Numéro de publication internationale:
**WO 2014/102076 (03.07.2014 Gazette 2014/27)**

(54) **ELEMENT DE MOULE COMPORTANT DES MOYENS DE DECOUPE POUR LE MOULAGE ET LA VULCANISATION D'UNE BANDE DE ROULEMENT D'UN PNEUMATIQUE**

FORMWERKZEUGELEMENT MIT SCHNEIDVORRICHTUNGEN ZUM FORMEN UND VULKANISIEREN VON REIFENLAUFFLÄCHEN

TIRE MOULDING ELEMENT COMPRISING CUTTING MEANS FOR MOULDING AND CURING A TIRE TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2012 FR 1262922**

(43) Date de publication de la demande:
**04.11.2015 Bulletin 2015/45**

(73) Titulaire: **Compagnie Générale des Etablissements Michelin**
**63000 Clermont-Ferrand (FR)**

(72) Inventeur: **KANEKO, Shuichi**
**Tokyo 163-1073 (JP)**

(74) Mandataire: **Regimbeau**
**20, rue de Chazelles**
**75847 Paris Cedex 17 (FR)**

(56) Documents cités:
WO-A1-99/21701     US-A1- 2003 101 851
US-A1- 2005 109 438     US-A1- 2006 027 295

**Description**

DOMAINE DE L'INVENTION

La présente invention concerne le domaine des moules pour le moulage et la vulcanisation d'une bande de roulement d'un pneumatique. Plus particulièrement, l'invention concerne les moules aptes à mouler dans la bande de roulement des blocs de gomme recouverts partiellement ou en totalité par une couche de recouvrement.

ETAT DE LA TECHNIQUE

Il est connu de concevoir des pneumatiques dont la bande de roulement comprend différents mélanges de caoutchouc. Le document WO 03089257 divulgue de telles bandes de roulement. Plus particulièrement le document WO 03089257 divulgue une bande de roulement comportant des blocs de gommes dont les parois sont recouvertes par une couche de recouvrement. Le matériau constituant cette couche de recouvrement est différent du mélange de caoutchouc constituant la bande de roulement. Ce matériau présente notamment une adhérence sur sol mouillé bien supérieure à l'adhérence sur sol mouillé du mélange de caoutchouc. Ceci permet d'améliorer très sensiblement les performances en régime de virage sur sol mouillé.

Un mode de fabrication de cette bande de roulement est notamment divulgué dans le document WO 2006069912. Selon ce mode de fabrication, dans une première étape, il est prévu d'injecter sous forme d'un ou plusieurs inserts le matériau destiné à constituer une couche de recouvrement dans l'ébauche crue à l'aide d'une buse d'injection. Le ou les inserts sont ensuite mis en forme, dans une seconde étape, par des cordons d'un moule de vulcanisation pour recouvrir tout ou partie des parois des rainures moulées par ces cordons.

Ce mode de fabrication connaît quelques limites, en particulier pour obtenir des moulages de précision. En effet au cours de sa mise en forme, l'insert subi un effort de cisaillement important de la part du cordon en vue de transformer cet insert en une couche d'épaisseur réduite. Cet effort de cisaillement peut générer des fissures au sein de l'insert ce qui rend plus difficile la maîtrise des mouvements du matériau composant cet insert. La forme et l'épaisseur de la couche de recouvrement ainsi formée peuvent alors être aléatoires. Les avantages apportés par la couche supplémentaire sur le fonctionnement du pneumatique sont alors réduits.

De plus dans ce mode de fabrication, il est nécessaire de faire correspondre les inserts avec les cordons. Ceci rend alors plus complexe la fabrication de la bande de roulement.

US 2005/109438 A1 divulgue un élément de moule pour le moulage et la vulcanisation d'une bande de roulement d'un pneumatique selon le préambule de la revendication 1.

Il existe donc un besoin pour améliorer la mise en place d'une couche de recouvrement sur des parois de blocs de gomme d'une bande de roulement d'un pneumatique.

DEFINITIONS

Par « pneumatique », on entend tous les types de bandages élastiques soumis à une pression interne ou non.

Par « ébauche crue » d'un pneumatique, on entend une superposition d'une pluralité de produits semifinis caoutchouteux présents sous forme de bandelettes ou de feuilles, renforcées ou non. L'ébauche crue est destinée à être vulcanisée dans un moule pour obtenir le pneumatique.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement », on entend la surface formée par les points de la bande de roulement du pneumatique qui entrent en contact avec la chaussée lorsque le pneumatique roule.

Par « élément en relief » dans une bande de roulement, on entend un élément de gomme faisant protubérance dans cette bande de roulement.

Par « moule », on entend un ensemble d'éléments de moule séparés qui, par rapprochement relatif, permettent de délimiter un espace de moulage toroïdal.

Par « élément de moule » d'un moule, on entend une partie d'un moule. Un élément de moule est par exemple un segment de moule.

Par « surface de moulage » d'un élément de moule, on entend la surface de l'élément de moule destinée à mouler tout ou partie de la surface de roulement de la bande de roulement du pneumatique.

Par « lamelle » d'un élément de moule, on entend une protubérance faisant saillie à partir de la surface de moulage et destinée à mouler des incisions dans la bande de roulement du pneumatique, c'est-à-dire des découpures qui se ferment au moins en partie dans l'aire de contact du pneumatique avec le sol.

Par « lamelle de découpe », on entend une lamelle comportant des moyens de découpe aptes à découper une couche de recouvrement présente sur la surface externe d'une ébauche crue.

RESUME DE L'INVENTION

L'invention concerne un élément de moule selon la revendication 1 pour le moulage et la vulcanisation d'une bande de roulement d'un pneumatique. Cette bande de roulement comprend une pluralité d'éléments en relief, chaque élément en relief comportant une face de contact destinée à venir en contact avec une chaussée et des faces latérales reliées à cette face de contact. L'élément de moule comporte des lamelles de découpe aptes à découper une couche de recouvrement préalablement mise en place sur une ébauche crue du pneumatique. Chaque lamelle de découpe comportant un corps, au moins une des lamelles de découpe comporte une protubérance faisant saillie à partir de ce corps, cette protubérance étant apte à entraîner une partie découpée de la couche de recouvrement dans la profondeur de l'ébauche crue pour recouvrir tout ou partie d'une face latérale d'un élément en relief. La lamelle de découpe comporte à une extrémité du corps une arête formant un angle aigu α pour la découpe de la couche de recouvrement.

Les lamelles de découpe sont aptes à découper une couche de recouvrement recouvrant une surface externe d'une ébauche crue. La protubérance guide, quant à elle une partie de la couche de recouvrement découpée dans l'ébauche crue.

L'invention propose ainsi de découper la couche de recouvrement et de placer une partie de cette couche dans la profondeur de l'ébauche crue au cours d'un même mouvement de l'élément de moule par rapport à l'ébauche crue.

Dans une variante de réalisation, la protubérance est discontinue dans la longueur de la lamelle de découpe.

Selon l'invention, la protubérance comporte au moins un plot d'entraînement.

On améliore ainsi la capacité de la protubérance à attraper la couche de recouvrement et à l'entraîner dans la profondeur de l'ébauche crue.

Dans un mode de réalisation préférentiel, la protubérance présente un profil triangulaire.

De cette manière, on facilite l'extraction de la lamelle de découpe hors du pneumatique une fois celui-ci vulcanisé.

Dans une variante de réalisation, la lame de découpe comporte deux protubérances disposées de part et d'autre du corps de la lame.

Il est ainsi possible de recouvrir avec des couches de recouvrement les deux parois qui délimitent l'incision moulée par la lamelle de découpe.

Un autre objet de l'invention concerne un moule comportant une pluralité d'éléments de moule tels que décrits ci-dessus.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la **figure 1** représente schématiquement une partie d'une bande de roulement d'un pneumatique ;
- la **figure 2** représente schématiquement un élément de moule apte à mouler une partie de la bande de roulement de la **figure 1 ;**
- la **figure 3** illustre une première étape de moulage par l'élément de moule de la **figure 2,**
- la **figure 4** illustre une seconde étape de moulage par l'élément de moule de la **figure 2 ;**
- la **figure 5** illustre une troisième étape de moulage par l'élément de moule de la **figure 2 ;**
- la **figure 6** représente schématiquement une partie de la bande de roulement d'un pneumatique obtenue suite aux étapes de moulage des **figures 3-5 ;**
- la **figure 7** représente schématiquement une variante de la lamelle de découpe de la **figure 2 ;**
- la **figure 8** représente schématiquement une variante de la lamelle de découpe de la **figure 2** selon l'invention;
- la **figure 9** représente schématiquement une autre variante de la lamelle de découpe de la **figure 2 ;**
- la **figure 10** représente schématiquement une autre variante de la lamelle de découpe de la **figure 2.**

Dans la description qui va suivre, des éléments sensiblement identiques ou similaires seront désignés par des références identiques.

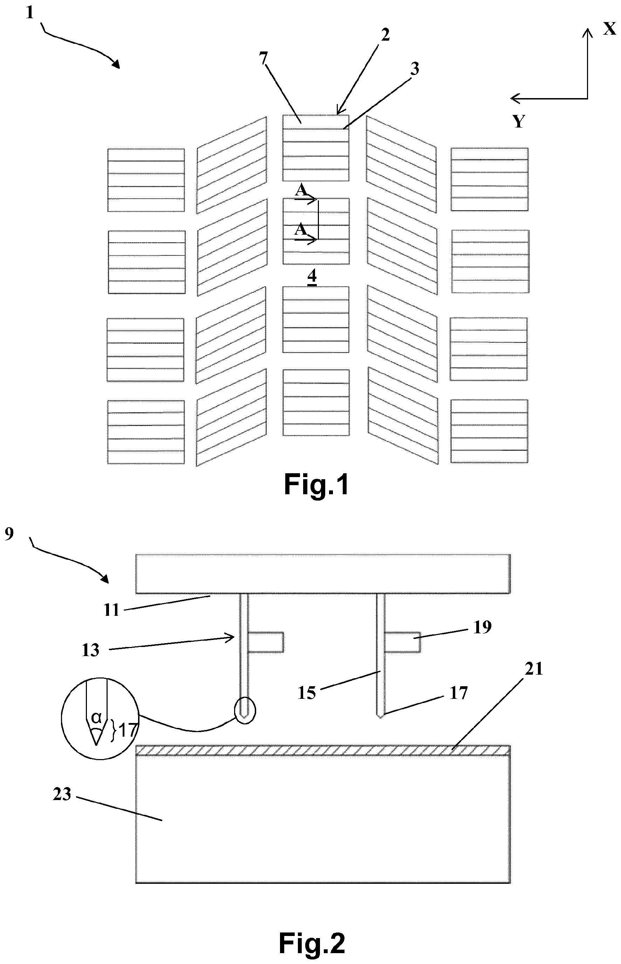

La **figure 1** représente une partie d'une bande de roulement 1 d'un pneumatique. Cette bande de roulement comprend une pluralité de blocs de gomme 2 en relief organisés pour former la sculpture de cette bande de roulement. Les blocs de gomme 2 sont délimités par des rainures 4 qui peuvent s'étendre selon une direction axiale Y, parallèlement à l'axe de rotation du pneumatique, selon une direction circonférentielle X, perpendiculaire à la direction axiale Y, ou selon une direction oblique ayant à la fois une composante circonférentielle et une composante axiale non nulles. Chaque bloc de gomme 2 est ici divisé en une pluralité de bandes de gomme 7 séparées par des incisions 3.

La **figure 2** représente un élément de moule 9 apte à mouler une partie de la bande de roulement de la **figure 1.** Cet élément de moule comporte une surface de moulage 11 apte à mouler une partie d'une surface de roulement d'une bande de roulement et des lamelles de découpe 13 faisant saillie à partir de la surface de moulage 11. Chaque lamelle de découpe 13 comporte un corps 15, des moyens de découpe 17 situés à une extrémité de ce corps 15, et une protubérance 19 faisant saillie à partir du corps 15. Les moyens de découpe 17 se présentent, ici, sous la forme d'une arête présentant un angle aigu α inférieur ou égal à 60°. Dans un mode de réalisation préférentiel, l'angle α est inférieur ou égal à 35°. Dans un autre mode de réalisation préférentiel, l'angle α est inférieur ou égal à 20°.

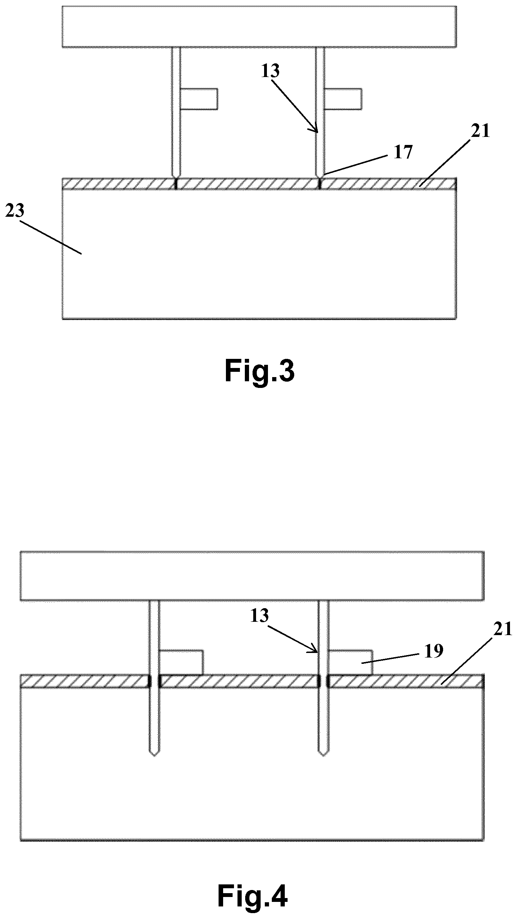

La **figure 3** illustre une première étape de moulage dans laquelle les moyens de découpe 17 des lamelles de découpe 13 sont en contact avec une couche de recouvrement 21 recouvrant une ébauche crue 23 d'un pneumatique.

Cette couche 21 de recouvrement présente ici un module élastique supérieur au module élastique du matériau caoutchouteux composant la bande de roulement 1. Un tel matériau est par exemple un matériau élastomère dont le module dynamique de cisaillement G* soumis à une contrainte maximale alternée de 0,7 MPa, à une fréquence de 10 Hz et à une température de -10°C est supérieur à 200 MPa et de préférence supérieur 300 MPa. Dans le présent document, les termes « module élastique G' » et « module visqueux G" » désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre de l'éprouvette est de 10 mm (elle a donc une section circulaire de 78.5 mm$^2$), l'épaisseur de chacune des portions de composition caoutchouteuse est de 2 mm, ce qui donne un ratio « diamètre sur épaisseur » de 5 (contrairement à la norme ISO 2856, mentionnée dans la norme ASTM, paragraphe X2.4, qui préconise une valeur d/L de 2). On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C). Le « module complexe » G* se définit comme la valeur absolue de la somme complexe des modules élastique G' et visqueux G" :

$$G^* = \sqrt{(G'^2 + G''^2)} \ .$$

Dans une variante de réalisation, le matériau élastomère de la couche de recouvrement comprend une composition à base d'au moins un élastomère diénique très fortement chargé en souffre, tel que de l'ébonite.

Dans une autre variante de réalisation, la couche de recouvrement comprend un assemblage de fibres, par exemple un assemblage tridimensionnel de fibres formant un feutre. Les fibres de ce feutre peuvent être choisies dans le groupe des fibres textiles, des fibres minérales et de leur mélange. On notera également que les fibres de ce feutre peuvent être choisies parmi des fibres textiles d'origine naturelle, par exemple, dans le groupe des fibres de soie, de coton, de bambou, de cellulose, de laine et de leurs mélanges.

Dans une autre variante de réalisation, le matériau élastomère de la couche de recouvrement comprend une composition à base d'au moins un polymère thermoplastique, tel que du polyéthylène téréphtalate (PET). Un tel polymère peut présenter un module de Young supérieur à 1 GPa.

La **figure 4** illustre une seconde étape de moulage dans laquelle les lamelles de découpe 13 ont découpées la couche de recouvrement 21 et la protubérance 19 vient en contact avec une partie de cette couche de recouvrement 21 découpée.

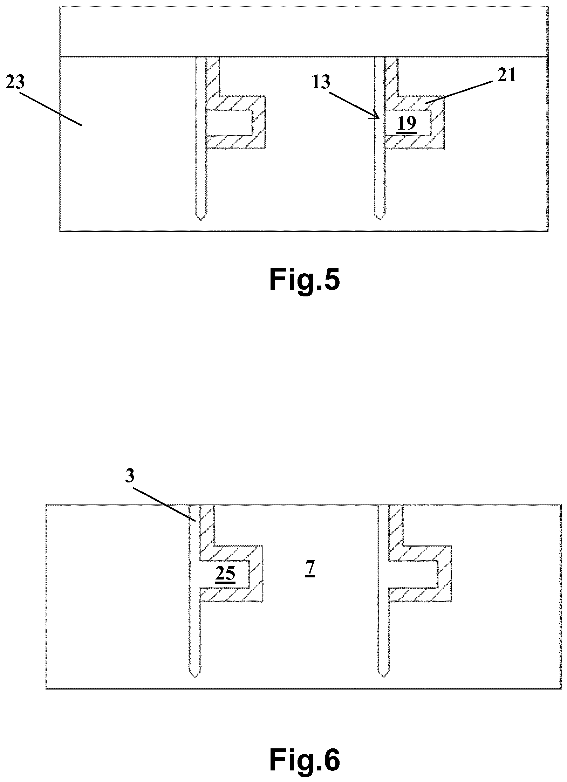

La **figure 5** illustre une troisième étape de moulage dans laquelle la lamelle de découpe 13 est entièrement positionnée dans l'ébauche crue 23. La partie découpée de la couche de recouvrement 21 a été entrainée dans la profondeur de l'ébauche crue 23 par la protubérance 19.

Dans des étapes de moulage non représentées, l'ébauche crue est ensuite vulcanisée pour obtenir un pneumatique et la lamelle de découpe 13 est extraite de ce pneumatique avec l'ouverture du moule. La **figure 6** représente une partie de la bande de roulement de ce pneumatique. Plus particulièrement, la **figure 6** représente une vue en coupe de la bande de roulement de la **figure 1** selon une ligne A-A. Dans cette vue en coupe, les bandes de gomme 7 délimitées par les incisions 3 comprennent des renfoncements 25 qui ont été moulés par les protubérances 19. Ces renfoncements sont délimités par la couche de recouvrement 21.

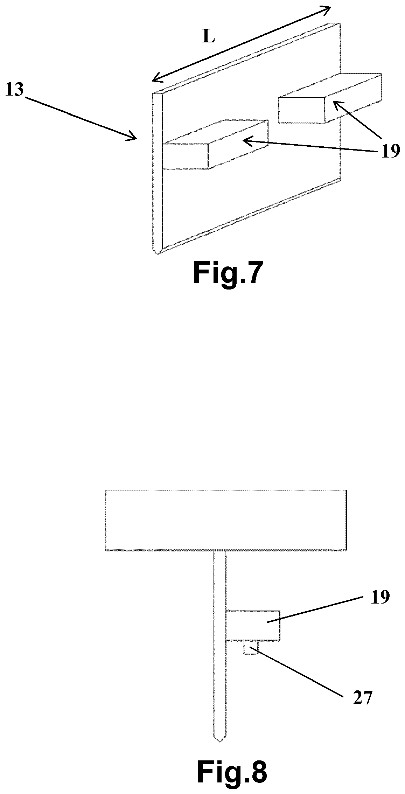

La **figure 7** représente une variante de la lamelle de découpe 13 dans laquelle la protubérance 19 est discontinue dans la longueur L de cette lamelle 13.

La **figure 8** représente une variante selon l'invention, dans laquelle la protubérance 19 comporte au moins un plot d'entraînement. Ce plot est destiné à améliorer la capacité de la protubérance 19 à attraper la couche de recouvrement et à l'entraîner dans la profondeur de l'ébauche crue.

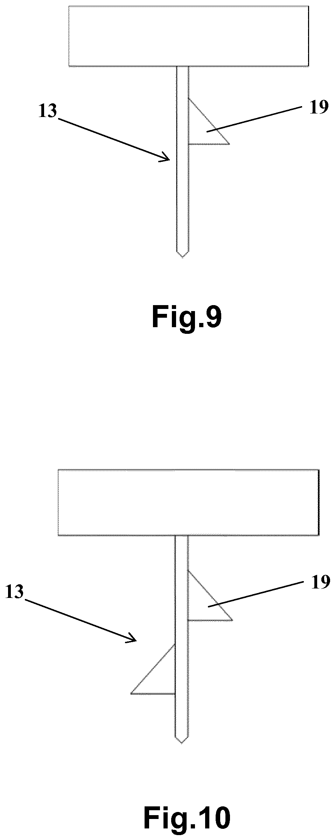

La **figure 9** représente une variante dans laquelle la protubérance 19 présente un profil triangulaire de sorte à améliorer son extraction hors du pneumatique une fois celui-ci vulcanisé.

La **figure 10** représente une variante dans laquelle la lamelle de découpe 13 comporte deux protubérances 10 disposées de part et d'autre du corps 15 de la lamelle 13. Ces protubérances sont, ici, décalées dans la hauteur de la lamelle 13. En variante, ces protubérances peuvent être disposées en vis-à-vis.

L'invention n'est pas limitée aux exemples décrits et représentés et diverses modifications peuvent y être apportées sans sortir de son cadre.

**Revendications**

1. Elément de moule pour le moulage et la vulcanisation d'une bande de roulement d'un pneumatique, cette bande de roulement comprenant une pluralité d'éléments en relief (2, 7), chaque élément en relief comportant une face de contact destinée à venir en contact avec une chaussée et des faces latérales reliées à cette face de contact, l'élément de moule (9) comportant des lamelles de découpe (13) aptes à découper une couche de recouvrement (21) préalablement mise en place sur une ébauche crue du pneumatique (23), chaque lamelle de découpe (13) comportant un corps (15), au moins une des lamelles de découpe (3) comportant une protubérance (19) faisant saillie à partir de ce corps (15), cette protubérance étant apte à entraîner une partie découpée de la couche de recouvrement dans la profondeur de l'ébauche crue pour recouvrir tout ou partie d'une face latérale d'un élément en relief (2,7), la lamelle de découpe comportant à une extrémité du corps (15) une arête (17) formant un angle aigu α pour la découpe de la couche de recouvrement (21) **caractérisé en ce que** la protubérance (19) comporte au moins un plot d'entraînement (27).

**2.** Elément de moule selon la revendication 1, **caractérisé en ce que** la protubérance (19) est discontinue dans la longueur (L) de la lamelle de découpe (13).

**3.** Elément de moule selon l'une quelconque des revendications 1 à 2, **caractérisé en ce que**, vue en coupe, la protubérance (19) présente un profil triangulaire.

**4.** Elément de moule selon l'une quelconque des revendications 1 à 3, **caractérisé en ce que** la lamelle de découpe (13) comporte deux protubérances (19) disposées de part et d'autre du corps (15) de la lamelle (13).

**5.** Moule pour le moulage et la vulcanisation d'une bande de roulement d'un pneumatique, ce moule comportant une pluralité d'éléments de moule selon l'une quelconque des revendications 1 à 4.

**Patentansprüche**

**1.** Formwerkzeugelement für das Formen und Vulkanisieren einer Reifenlauffläche, wobei diese Lauffläche eine Vielzahl von Reliefelementen (2, 7) umfasst, wobei jedes Reliefelement eine Kontaktseite aufweist, die bestimmt ist, mit einer Fahrbahn in Kontakt zu kommen, und seitliche Seiten, die mit dieser Kontaktseite verbunden sind, wobei das Formwerkzeugelement (9) Schneidlamellen (13) aufweist, die imstande sind, eine zuvor auf einem unbearbeiteten Rohling des Reifens (23) platzierte Deckschicht (21) zu schneiden, wobei jede Schneidlamelle (13) einen Körper (15) aufweist, wobei mindestens eine der Schneidlamellen (3) einen Vorsprung (19) aufweist, der ab diesem Körper (15) hervorsteht, wobei dieser Vorsprung imstande ist, einen geschnittenen Teil der Deckschicht in der Tiefe des unbearbeiteten Rohlings mitzunehmen, um eine seitliche Seite eines Reliefelements (2, 7) ganz oder teilweise zu bedecken, wobei die Schneidlamelle an einem Ende des Körpers (15) einen Grat (17) aufweist, der einen spitzen Winkel α für das Schneiden der Deckschicht (21) bildet, **dadurch gekennzeichnet, dass** der Vorsprung (19) mindestens ein Mitnehmerklötzchen (27) aufweist.

**2.** Formwerkzeugelement nach Anspruch 1, **dadurch gekennzeichnet, dass** der Vorsprung (19) in der Länge (L) der Schneidlamelle (13) diskontinuierlich ist.

**3.** Formwerkzeugelement nach einem der Ansprüche 1 bis 2, **dadurch gekennzeichnet, dass** der Vorsprung (19), im Schnitt gesehen, ein dreieckiges Profil aufweist.

**4.** Formwerkzeugelement nach einem der Ansprüche 1 bis 3, **dadurch gekennzeichnet, dass** die Schneidlamelle (13) zwei Vorsprünge (19) aufweist, die beiderseits des Körpers (15) der Lamelle (13) angeordnet sind.

**5.** Formwerkzeug für das Formen und das Vulkanisieren einer Reifenlauffläche, wobei dieses Formwerkzeug eine Vielzahl von Formwerkzeugelementen nach einem der Ansprüche 1 bis 4 aufweist.

**Claims**

**1.** A mold element for molding and vulcanization of a tread of a tire, this tread comprising a plurality of elements in relief (2, 7), each element in relief including a contact face designed to come into contact with a road surface, and lateral faces connected to this contact face, the mold element (9) including cutting blades (13) capable of cutting an overlay layer (21) previously installed on a crude blank of the tire (23), each cutting blade (13) including a body (15), at least one of the cutting blades (3) including a protuberance (19) protruding from this body (15), this protuberance being able to drive a cut portion of the overlay layer into the depth of the crude blank to cover all or a portion of the lateral face of an element in relief (2, 7), the cutting blade including, at one end of the body (15) a ridge (17) forming an acute angle α for cutting the overlay layer (21), **characterized in that** the protuberance (19) includes at least one drive pad (27).

**2.** The mold element according to claim 1, **characterized in that** the protuberance (19) is discontinuous over the length (L) of the cutting blade (13).

3. The mold element according to any one of claims 1 to 2, **characterized in that**, seen in section, the protuberance (19) has a triangular profile.

4. The mold element according to any one of claims 1 to 3, **characterized in that** the cutting blade (13) includes two protuberances (19) disposed on either side of the body (15) of the blade (13).

5. A mold for the molding and vulcanization of a tread of a tire, this mold including a plurality of mold elements according to any one of claims 1 to 4.

**Fig.1**

**Fig.2**

**Fig.3**

**Fig.4**

**Fig.5**

**Fig.6**

**Fig.7**

**Fig.8**

**Fig.9**

**Fig.10**

**RÉFÉRENCES CITÉES DANS LA DESCRIPTION**

**Documents brevets cités dans la description**

- WO 03089257 A
- WO 2006069912 A
- US 2005109438 A1